# EUROPEAN PATENT APPLICATION

(11) **EP 1 564 453 A1**
(43) Date of publication of application: **17.08.2005**
(21) Application number: 05002120.3
(22) Date of filing: 02.02.2005
(51) Int. Cl.: F16J 15/08

(54) **Cylinder head gasket**

(30) Priority: 16.02.2004 JP 2004038582
(71) Applicant: ISHIKAWA GASKET CO. LTD., Tokyo (JP)
(72) Inventor: Udagawa, Tsunekazu Ishikawa Gasket Co., Ltd., Utsunomiya-shi Tochigi-ken (JP)
(74) Representative: Gassner, Wolfgang

(57) **Abstract**

A cylinder head gasket is provided for reducing a seal surface pressure around a cylinder bore, thereby preventing formation of impression by the gasket in an engine member. It is possible to obtain sufficient sealing performance even in an engine with low rigidity. The cylinder head gasket (1) is formed of a first metal plate (10) with a flange (11) around a cylinder bore (2), and a second metal plate (20) overlapping with a base portion of the first metal plate. A ring plate (30) with a bead (31) is disposed in the flange (11) of the first metal plate (10). The bead (31) is formed of a half bead.

## Description

### Background of the Invention and Related Art Statement

The present invention relates to a cylinder head gasket placed between two members such as a cylinder head and a cylinder block of an internal combustion engine.

When joint surfaces between a cylinder head and a cylinder block (cylinder body) of an automobile engine are sealed, a metal cylinder head gasket is placed between the cylinder head and the cylinder block to seal combustion gas, coolant water, and lubrication oil.

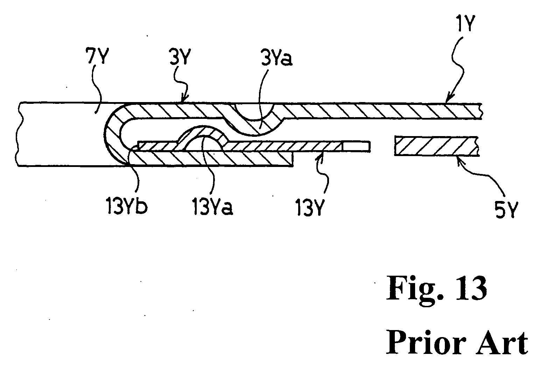

As shown in Fig. 13, among such metal cylinder head gaskets, a metal laminated gasket 1Y has been proposed (see Patent Reference 1). The metal laminated gasket 1Y is provided with a folded portion around a hole to be sealed 7Y. A shim 13Y with a ring shape is disposed in the folded portion for adjusting a thickness, and a full bead 13Ya is formed in the shim 13Y for increasing a seal surface pressure.

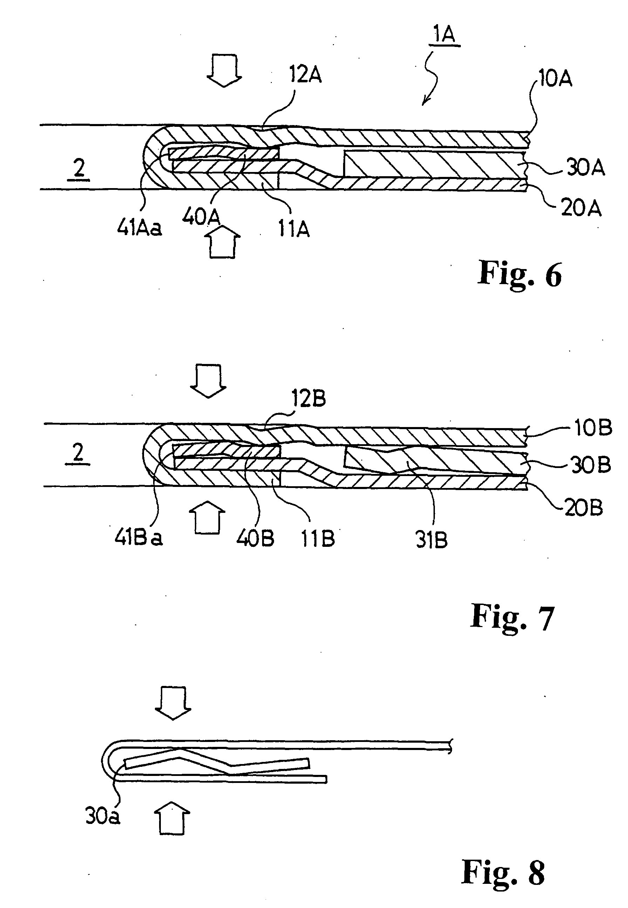

In the gasket 1Y provided with the ring shaped plate 13Y with the full bead 13Ya, however, when the gasket 1Y receives a high compressive force, the ring shaped plate 13Y deforms as shown in Fig. 7. Accordingly, an inner peripheral edge 13Yb abuts against a first metal plate 3Y, thereby increasing a surface pressure at the location.

In particular, as a weight and size of an engine have been reduced recently, the engine tends to have lower rigidity. In sealing with the cylinder head gasket, when a large seal surface pressure is applied around a cylinder bore to secure sealing performance, an impression or dent may be generated around the cylinder bore of the engine with low rigidity. Accordingly, combustion gas tends to leak through the impression, and it is difficult to obtain sufficient sealing performance.

Patent Reference 1; Japanese Patent No. 3113642

In view of the problems described above, an object of the present invention is to provide a cylinder head gasket, in which it is possible to reduce a seal surface pressure generated around a cylinder bore, thereby preventing an impression in an engine member. Accordingly, even in an engine with low rigidity, it is possible to provide a cylinder head gasket with sufficient sealing performance.

Further objects and advantages of the invention will be apparent from the following description of the invention.

### Summary of the Invention

In order to attain the objects described above, according to the present invention, a cylinder head gasket is formed of a first metal plate having a folded portion around a cylinder bore, a second metal plate laminated with the first metal plate, and a ring shaped plate with a bead disposed in the folded portion of the first metal plate. The bead is formed of a half bead.

Also, a cylinder head gasket is formed of a first metal plate having a folded portion around a cylinder bore, and a second metal plate with a first half bead. An edge of the first bead is inserted into the folded portion. A step of the first half bead is located outside the folded portion. A ring shaped plate with a second bead is disposed between the edge of the first half bead and the first metal plate. The second bead is formed of a half bead.

In the cylinder head gasket described above, a third metal plate with a third half bead is disposed between the second metal plate and the first metal plate and outside the step of the first half bead.

Further, in the cylinder head gasket described above, a full bead is formed at a portion opposite to the folded portion of the first metal plate, and abuts against an outer flat portion of the half bead of the ring shape plate.

In the present invention, the bead of the ring shaped plate disposed in the folded portion is formed of the half bead. Accordingly, it is possible to reduce a surface pressure around the cylinder bore. Also, it is possible to prevent an impression around the cylinder bore of an engine member, thereby preventing sealing performance from lowering.

Further, it is possible to obtain restoration property and durability against creep in the folded portion of the gasket with the half bead of the ring shaped plate, thereby improving sealing performance around the bore. Further, it is easy to form and arrange the ring shaped plate with the half bead, thereby making it easy to produce the gasket and secure efficient manufacturing such as improved productivity.

### Brief Description of the Drawings

Fig. 1 is a plan view of a cylinder head gasket according to embodiments of the present invention;
Fig. 2 is a partial perspective sectional view showing a structure of the cylinder head gasket according to a first embodiment of the present invention;
Fig. 3 is a partial perspective sectional view showing a structure of the cylinder head gasket according to a second embodiment of the present invention;
Fig. 4 is a partial perspective sectional view showing a structure of the cylinder head gasket according to a third embodiment of the present invention;
Fig. 5 is a partial sectional view showing the cylinder head gasket in Fig. 2 in a compressed state;
Fig. 6 is a partial sectional view showing the cylinder head gasket in Fig. 3 in a compressed state;
Fig. 7 is a partial sectional view showing the cylinder head gasket in Fig. 4 in a compressed state;
Fig. 8 is a partial sectional view schematically showing a half bead of a ring shaped plate in a compressed state;
Fig. 9 is a graph showing distributions of surface pressures generated at a head side of the embodiment and a comparative example;
Fig. 10 is a partial perspective sectional view showing a structure of a cylinder head gasket according to the comparative example;
Fig. 11 is a partial sectional view showing the cylinder head gasket in Fig. 10 in a compressed state;
Fig. 12 is a partial sectional view showing a full bead of a ring shaped plate in a compressed state; and
Fig. 13 is a partial sectional view showing a structure of a conventional cylinder head gasket.

### Detailed Description of Preferred Embodiments

Hereunder, a cylinder head gasket according to embodiments of the present invention will be explained with reference to the accompanying drawings.

A head gasket 1 according to the embodiments of the present invention is a laminated metal gasket to be placed between a cylinder head and a cylinder block (cylinder body) for sealing combustion gas with a high pressure and high temperature, and fluid such as coolant water and oil in a coolant passage and cooling oil passage.

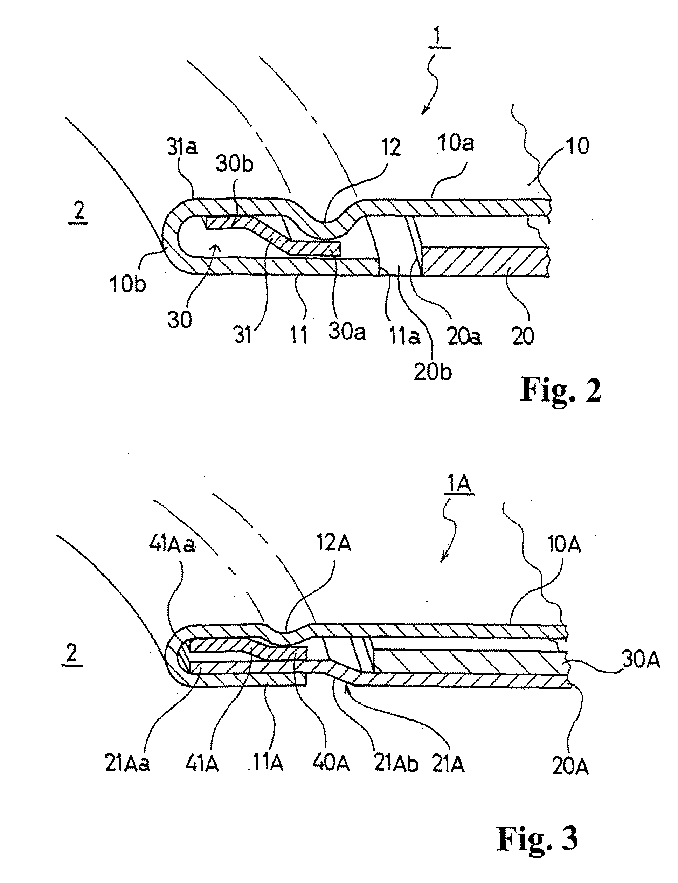

Figs. 2 to 8 and 10 to 13 are schematic explanatory views in which a thickness of the cylinder head gasket 1, and sizes and aspect ratios of a bead and a surface pressure supporting plate are different from actual ones for emphasizing a sealing portion for the sake of explanation.

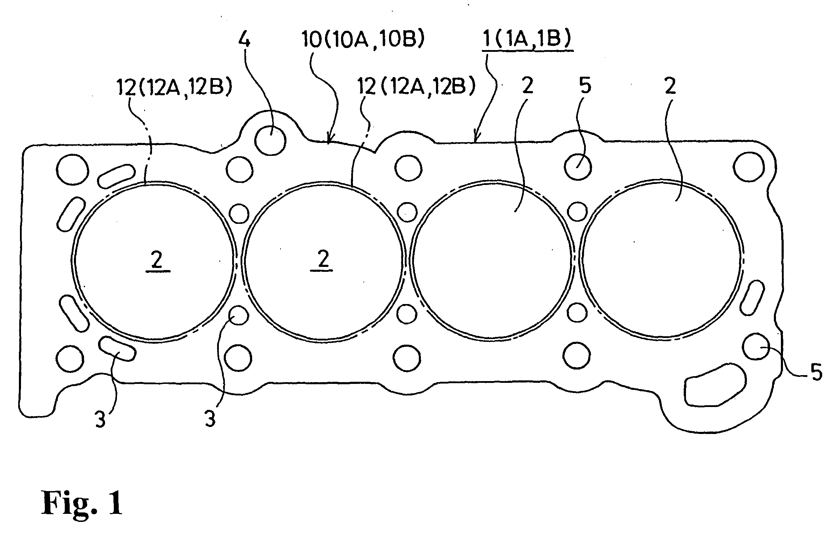

As shown in Figs. 1 and 2, according to a first embodiment of the present invention, the cylinder gasket 1 is formed of two metal plates, i.e., a first metal plate 10 and a second metal plate 20, and a ring shaped plate 30. The first metal plate 10 and the second metal plate 20 are made of annealed stainless steel (annealed material), or soft steel. The ring shaped plate 30 is made of a spring material (spring steel, stainless steel) with rigidity less than that of the first metal plate 10.

The metal plates 10 and 20 are formed in a shape corresponding to a shape of an engine member such as a cylinder block. As shown in Fig. 1, the metal plates 10 and 20 are provided with cylinder bores 2, coolant water holes 3, oil holes 4 for circulating oil, and bolt holes 5 for tightening bolts.

As shown in Fig. 2, the first metal plate 10 is provided with a base portion 10a, a curved portion 10b, a folded portion or flange 11 around the cylinder bore 2. The second metal plate 20 is laminated outside the folded portion 11 so as not to overlap with the folded portion 11. That is, a hole 20b with an inner peripheral edge 20a larger than an outer peripheral edge 11a of the folded portion 11 is formed in the second metal plate 20 at a side of the cylinder bore 2. Further, the ring shaped plate 30 having inner and outer flat portions 30a, 30b and a bead 31 formed of a half bead is disposed in the folded portion 11 of the first metal plate 10. A full bead 12 is formed in the base portion 10a of the first metal plate 10 at a side opposite to the folded portion 11 to abut against the outer flat portion 30b.

A cylinder head gasket according to a second embodiment will be explained next.

As shown in Figs. 1 and 3, according to the second aspect of the present invention, a cylinder head gasket 1A is formed of a pair of a first metal plate 10A and a second metal plate 20A, a third metal plate 30A (intermediate plate), and a ring shaped plate 40A. The first metal plate 10A, the second metal plate 20A, and the third metal plate 30A are made of annealed stainless steel (annealed material), or soft steel. The ring shaped plate 40A is made of a spring material (spring steel, stainless steel) with rigidity less than that of the first metal plate 10A.

The metal plates 10A, 20A, and 30A are formed in a shape corresponding to a shape of an engine member such as a cylinder block. As shown in Fig. 1, the metal plates 10A, 20A, and 30A are provided with cylinder bores 2, coolant water holes 3, oil holes 4 for circulating oil, and bolt holes 5 for tightening bolts.

As shown in Fig. 3, in the cylinder head gasket 1A according to the second aspect of the present invention, the first metal plate 10A is provided with a folded portion 11A around the cylinder bore 2. The second metal plate 20A with a second half bead 21A is laminated, so that an edge 21Aa of the first half bead 21A is inserted into the folded portion 11A, and a step 21Ab of the first half bead 21A is located outside of the folded portion 11A. Further, the ring shaped plate 40A with a second bead 41A formed of a half bead is disposed between the edge 21Aa of the first half bead 21A and the first metal plate 10A. A full bead 12A is formed in the first metal plate 10A at a side opposite to the folded portion 11A to abut against an outer flat portion of the half bead 41A.

A cylinder head gasket according to a third embodiment will be explained next.

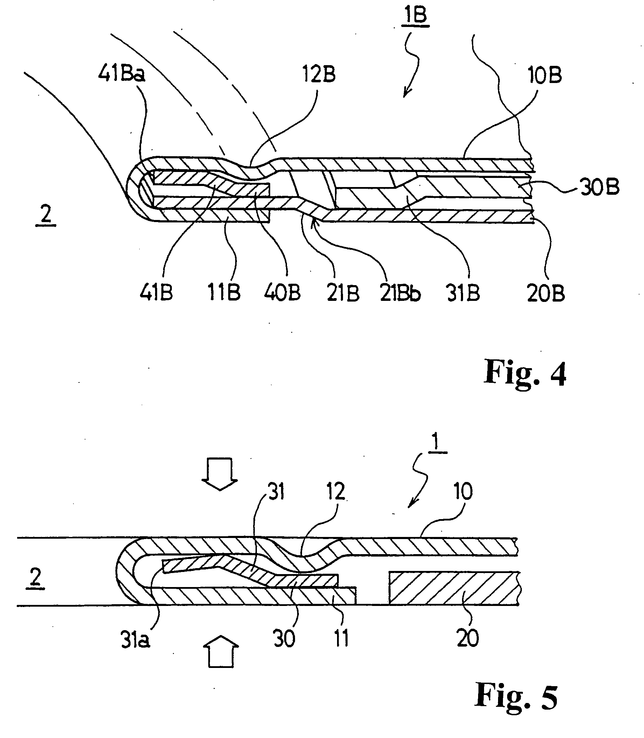

As shown in Fig. 4, according to the third aspect of the present invention, in addition to the structure of the cylinder head gasket 1A in the second embodiment, in a cylinder head gasket 1B, a third metal plate 30B disposed between the first metal plate 10B and the second metal plate 20B is provided with a third half bead 31B outside a step 21Bb of a first half bead 21B.

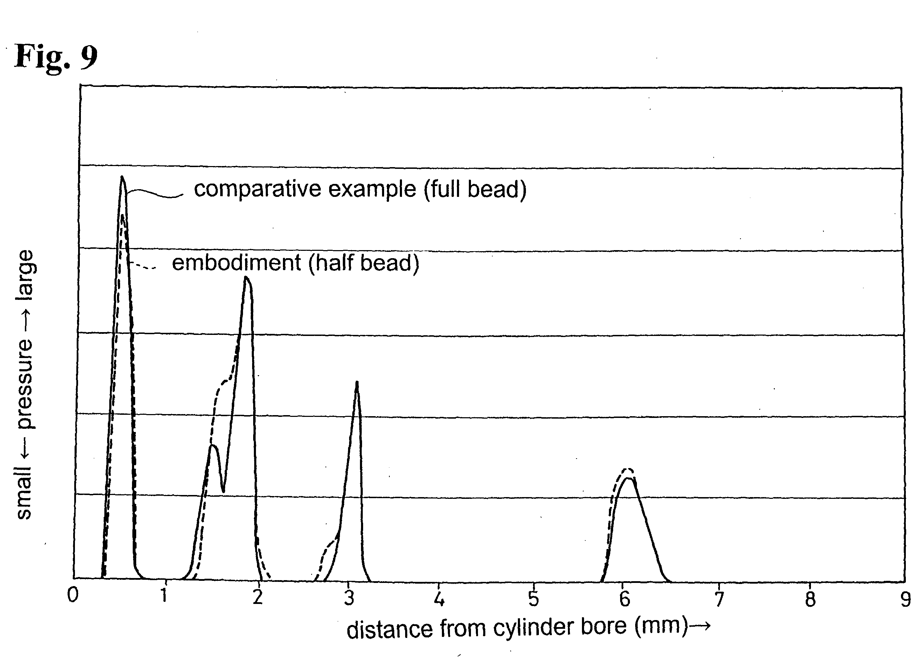

With these structures, when the cylinder head gaskets 1, 1A, and 1B receive a strong compression force, the ring shaped plate 30, 40A, and 40B deform as shown in Figs. 5 to 7, or schematically shown in Fig. 8. Accordingly, the inner edge 30a, 40Aa, and 40Ba face the folded portion 11, 11A, and 11B, and do not abut against the first metal plates 10, 10A, and 10B, thereby reducing a surface pressure generated at the locations as compared with a full bead deforming as shown in Fig. 9. As a result, it is possible to reduce a surface pressure at a seal line adjacent to the cylinder bore 2, thereby preventing sealing performance from lowering due to an impression around the cylinder bore of an engine member.

Further, it is possible to obtain restoration property, easy processing, and durability against creep in the folded portion of the gasket, thereby improving sealing performance around the cylinder bore.

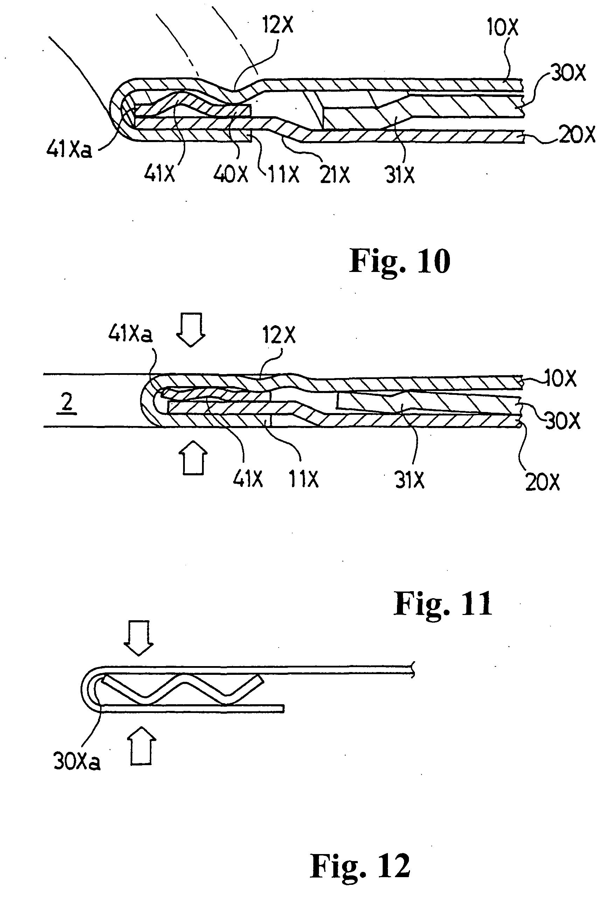

Distributions of surface pressures at a head side are compared through numerical calculation between the embodiment in which the half bead 41B is disposed in the folded portion as shown in Fig. 4, and a comparative example in which a half bead 41X is provided instead of the half bead as shown in Fig. 10.

As analytical conditions, a cylinder head and a cylinder block are assumed to be rigid bodies, and are compressed up to 1 µm after compression. According to a result, in a case of the comparative example with the full bead, as shown in Fig. 11, an edge 41Xa of the full bead 41X deforms to lift and abut against a first metal plate 10X. In a case of the embodiment with the half bead, as shown in Fig. 7, the edge 41Ba of the half bead 41B deforms to face the folded portion, and not to abut against the first metal plate 10B. Figs. 8 and 12 are views schematically showing a deformation of the bead of the ringshaped plate in cases of the half bead and full bead.

As shown in Fig. 9 showing the distributions of the surface pressures at a head side, it is apparent that the surface pressure near the cylinder bore is reduced by about 10% in the embodiment as compared with the comparative example.

The disclosure of Japanese Patent Application No. 2004-038582, filed on February 16, 2004, is incorporated in the application.

## Claims

1. A cylinder head gasket (1, 1A, 1B) comprising:
a first metal plate (10, 10A, 10B) having a base portion (10a), a cylinder bore (2), a curved portion (10b) extending from the base portion to define the cylinder bore, and a flange (11) extending from the curved portion to be located under the base portion around the cylinder bore,
a second metal plate (20, 20A, 20B) laminated with the base portion of the first metal plate, and
a ring plate (30, 40A, 40B) disposed between the flange (11, 11A, 11B)) and the base portion,
said cylinder head gasket (1, 1A, 1B) being **characterized in that** said ring plate (30, 40A, 40B) has a first half bead (31, 41A, 41B) in a middle thereof to provide a surface pressure at a portion slightly away from the cylinder bore.

2. A cylinder head gasket (1, 1A, 1B) according to claim 1, wherein said ring plate (30, 40A, 40B) includes an inner side (30b) located close to the base portion, and an outer side (30a) located close to the flange when the gasket is assembled, said first half bead (31, 41A, 41B) being located between the inner and outer sides.

3. A cylinder head gasket (1) according to claim 1 or 2, wherein said second metal plate (20) is located outside the flange.

4. A cylinder head gasket (1A, 1B) according to any one of claims 1 to 3, wherein said second metal plate (20A, 20B) includes an inner portion (21Aa) located above the flange (11A, 11B), an outer portion located outside the flange, and a second half bead (21A, 21B) located between the inner and outer portions and crossing an edge of the flange.

5. A cylinder head gasket (1A, 1B) according to any one of claims 1 to 4, further comprising a third metal plate (30A, 30B) disposed outside the flange between the first metal plate and the second metal plate.

6. A cylinder head gasket (1B) according to claim 5, wherein said third metal plate (30B) has a third half bead (31B) outside the second half bead.

7. A cylinder head gasket (1, 1A, 1B) according to any one of claims 1 to 6, wherein said first metal plate (10, 10A, 10B) further includes a full bead (12, 12A, 12B) on a side opposite to the flange for abutting against the outer side of the ring plate.
